# FASCICULE DE BREVET EUROPEEN

(11) **EP 1 082 549 B1**
(45) Date de publication et mention de la délivrance du brevet: **11.12.2002**
(21) Numéro de dépôt: 00915230.7
(22) Date de dépôt: 28.03.2000
(51) Int. Cl.: F16D 13/75

(54) **EMBRAYAGE A FRICTION A DISPOSITIF DE RATTRAPAGE D'USURE DES GARNITURES DE FRICTION, EN PARTICULIER POUR VEHICULE AUTOMOBILE**
REIBUNGSKUPPLUNG MIT EINER VERSCHLEISS-NACHSTELLEINRICHTUNG ,INSBESONDERE FÜR KRAFTFAHRZEUGE
SLIP CLUTCH WITH A LINEAR FRICTION WEAR TAKE-UP DEVICE, ESPECIALLY FOR A MOTOR VEHICLE

(30) Priorité: 29.03.1999 FR 9903879
(43) Date de publication de la demande: 14.03.2001
(73) Titulaire: VALEO EMBRAYAGES, 80009 Amiens Cedex 1 (FR)
(72) Inventeur: GRATON, Michel, F-75020 Paris (FR)
(74) Mandataire: Gamonal, Didier
(86) Numéro de dépôt international: FR0000772
(87) Numéro de publication internationale: WO00058641

(56) Documents cités:
- FR-A- 2 753 503

## Description

La présente invention concerne un embrayage à friction, en particulier pour véhicule automobile, et se rapporte plus particulièrement à un embrayage équipé d'un dispositif de compensation de l'usure due notamment à l'usure d'au moins une garniture de friction, ledit dispositif, dit ci-après dispositif de rattrapage d'usure, opérant au fur et à mesure de l'usure de la ou des garnitures.

Un embrayage à friction classique comporte généralement un plateau de réaction appartenant à un volant moteur, éventuellement en deux parties pour formation d'un volant amortisseur ou d'un volant flexible, calé en rotation sur un premier arbre, usuellement un arbre menant tel que le vilebrequin du moteur à combustion interne, et supportant par sa périphérie externe un couvercle auquel est attaché au moins un plateau de pression.

Le plateau de pression est solidaire en rotation du couvercle et du plateau de réaction tout en pouvant se déplacer axialement sous la sollicitation de moyens embrayeurs à action axiale commandés par des moyens débrayeurs ; les moyens embrayeurs peuvent consister en des ressorts hélicoïdaux, ou en une ou deux rondelles Belleville montées en série ou en parallèle, soumis à l'action de leviers de débrayage formant les moyens débrayeurs ; généralement, les moyens embrayeurs et débrayeurs appartiennent à une même pièce, par exemple un diaphragme métallique prenant appui sur le couvercle ; le diaphragme peut être monté en série ou en parallèle avec une rondelle Belleville pour assurer une assistance de l'effort de débrayage.

Un disque de friction, portant au moins une garniture de friction à sa périphérie externe, solidaire en rotation d'un arbre, usuellement un arbre mené tel que l'arbre d'entrée de la boîte de vitesses, est intercalé entre le plateau de pression et le plateau de réaction de façon à être serré entre eux lorsque l'embrayage est en position d'engagement. Les moyens embrayeurs commandent le déplacement axial du plateau de pression lorsqu'ils sont actionnés par une butée de débrayage par l'intermédiaire des moyens débrayeurs. Le plus souvent, le disque de friction comporte un disque de support axialement élastique sur lequel sont fixées de part et d'autre deux garnitures de friction. Le serrage du disque de friction est ainsi progressif. En variante, le disque de support est rigide et est par exemple noyé à sa périphérie externe dans une garniture de friction.

Au cours de la durée de vie d'un tel embrayage, la ou les garnitures de friction ainsi que les contre-matériaux, plateau de pression et plateau de réaction, s'usent, ce qui provoque une variation de la position du plateau de pression et celles des moyens embrayeurs à action axiale et de la butée de débrayage, d'où il s'ensuit une variation de la force de serrage entre le disque de friction, d'une part, et les plateaux de pression et de réaction, d'autre part, en raison des modifications des conditions de travail des moyens débrayeurs, et la force nécessaire pour débrayer s'en trouve affectée. En dotant un tel embrayage d'un dispositif de rattrapage d'usure, on évite ces inconvénients, les moyens embrayeurs, ainsi que la butée de débrayage, usuellement en appui constant sur les moyens débrayeurs, occupant la même position lorsque l'embrayage est en position d'engagement en sorte que l'encombrement axial de l'embrayage est réduit.

On connaît un embrayage à friction, en particulier pour véhicule automobile, du genre comportant un plateau de réaction destiné à être calé en rotation sur un arbre menant, un disque de friction, portant à sa périphérie externe au moins une garniture de friction, destiné à être calé en rotation sur un arbre mené, un plateau de pression, un couvercle fixé sur le plateau de réaction, des moyens embrayeurs à action axiale qui sont commandés par des moyens débrayeurs et qui agissent entre, d'une part, le couvercle et, d'autre part, le plateau de pression par l'intermédiaire de moyens d'appui secondaire et primaire, le plateau de pression étant solidaire en rotation du couvercle tout en pouvant se déplacer axialement par rapport à lui et étant soumis à l'action de moyens élastiques de rappel rappelant le plateau de pression axialement vers le couvercle, ledit embrayage comportant également un dispositif de rattrapage d'usure comprenant des moyens à rampes dont les rampes sont disposées circonférentiellement, placés axialement entre les moyens d'appui et le plateau de pression, et adaptés à coopérer avec des moyens de contre-rampes, une denture avec laquelle coopère une vis sans fin disposée tangentiellement, les moyens à rampes étant solidaires en rotation de ladite denture, des moyens d'entraînement en rotation de la vis sans fin étant prévus, rendus opérationnels par l'usure de la ou des garnitures de friction lorsque l'embrayage est embrayé, constitués par une roue à rochet solidaire en rotation de la vis sans fin et commandés par l'intermédiaire d'une languette de commande que présente un organe élastique, la vis sans fin et la roue à rochet étant portées par un support, le support et l'organe élastique étant solidaires du couvercle, en étant placés à l'intérieur de celui-ci, le support étant en forme de U ayant une âme et deux ailes adaptées à supporter un axe portant la vis sans fin et la roue à rochet.

Un tel embrayage est par exemple décrit dans le document FR-A-2 753 503.

Jusqu'ici, dans un tel embrayage, l'organe élastique est supporté par l'axe grâce à deux oreilles qu'il présente munies de trous traversés par ledit axe au voisinage des extrémités de celui-ci ; une telle disposition fonctionne bien. Toutefois, il peut être souhaitable, d'une part, de simplifier l'organe élastique et, d'autre part, d'augmenter la longueur de la languette de commande pour diminuer les contraintes susceptibles d'affecter sa durée de vie.

La présente invention a pour but de répondre de manière simple et économique à ces souhaits.

Ainsi, selon l'invention, un embrayage du type ci-dessus est caractérisé par le fait que l'organe élastique est fixé à l'âme du support indépendamment de la fixation du support au couvercle.

Avantageusement, l'organe élastique est disposé, au moins en partie, dans la zone où il est fixé au support, entre l'âme du support et le couvercle.

Dès lors, la longueur de la languette de commande peut être augmentée et celle-ci est soumise à moins de contraintes. L'organe élastique est simplifié car il ne comporte pas d'ailes au contact des ailes du support.

De préférence, l'organe élastique a en coupe axiale une forme générale de U et comprend deux ailes d'orientation axiale dont une est munie d'un trou pour sa fixation au support, par exemple par rivetage ou clipsage, et dont l'autre est conformée en languette de commande en s'étendant globalement parallèlement à l'axe de l'embrayage.

Selon une forme de réalisation, l'âme du support se prolonge au delà des ailes en présentant un retour transversal s'étendant globalement perpendiculairement par rapport à l'âme et aux ailes, et l'aile, de fixation au support, de l'organe élastique se prolonge selon une languette globalement perpendiculaire dirigée vers l'extérieur du U fixée, ainsi que le retour du support, sur un rebord transversal du couvercle.

Avantageusement, la course, par rapport à la roue à rochet, lors de l'opération de débrayage, de la languette de commande est limitée par une butée de contrôle constituée par au moins une patte découpée dans le support.

Avantageusement, le bord de l'âme du support est découpé centralement par une échancrure ayant une largeur à laquelle est adaptée la largeur courante de l'organe élastique qui s'inscrit dans l'échancrure ; selon une forme préférée de réalisation, au fond de l'échancrure est ménagé un demi-crevé dont l'extrémité est arrondie, sa concavité étant dirigée vers l'intérieur des ailes du support : grâce à cette disposition, la languette de commande peut en fonctionnement s'enrouler autour du demi-crevé et sa déformation est progressive, ce qui augmente encore sa durée de vie.

De préférence, l'âme de l'organe élastique, qui relie ses ailes, présente au droit de son raccordement avec l'aile conformée en languette de commande une zone élargie adaptée à venir en butée sur la butée de contrôle du support.

Avantageusement, les moyens embrayeurs à action axiale sont constitués par un diaphragme.

Selon une forme de réalisation préférée, les moyens d'appui primaire sont constitués d'un embouti circonférentiel, continu ou fragmenté, du fond du couvercle.

Avantageusement, la roue à rochet est commandée par le diaphragme par l'intermédiaire de la languette de commande ; la roue à rochet est commandée par un actionneur constitué par un appendice que présente le diaphragme à sa périphérie externe ; deux pattes sont prévues, espacées circonférentiellement par un passage pour l'actionneur.

Avantageusement, les moyens à rampes sont constitués d'un anneau présentant axialement, d'un côté, les rampes inclinées et réparties circonférentiellement et, de l'autre côté, les moyens d'appui secondaire.

De préférence, les moyens de contre-rampes consistent en des plots destinés à coopérer avec les rampes des moyens à rampes .

Avantageusement, la vis sans fin est montée déplaçable selon son axe en étant soumise à l'action d'un moyen élastique dit de rattrapage.

Pour mieux faire comprendre l'objet de l'invention, on va en décrire maintenant, à titre d'exemple, purement illustratif et non limitatif, des modes de réalisation représentés sur les dessins annexés.

Sur ces dessins :
- la figure 1 est une vue partielle en coupe d'un embrayage selon l'invention équipé d'un dispositif de rattrapage d'usure ;
- la figure 2 est une vue de l'embrayage, partiellement arraché, selon la flèche II de la figure 1 ;
- la figure 3 est une vue de face du sous-ensemble constitué par le support et les organes qu'il porte ;
- la figure 4 est une vue en coupe selon IV-IV de la figure 3 ;
- les figures 5 à 7 représentent le support seul, la figure 5 étant une vue en coupe selon VI-VI de la figure 5 et la figure 7 une vue selon la flèche VII de cette même figure 5 ;
- la figure 8 est une vue en élévation de l'axe seul ;
- les figures 9 à 11 représentent la vis sans fin et la roue à rochet d'une seule pièce, la figure 9 étant une vue en élévation et les figures 10 et 11 des coupes selon X-X et XI-XI respectivement de la figure 9 ;
- les figures 12 à 14 représentent l'organe élastique seul, la figure 12 étant une vue en élévation, la figure 13 une vue en coupe selon XIII-XIII de la figure 12 et la figure 14 une vue selon la flèche XIV de cette même figure 12.

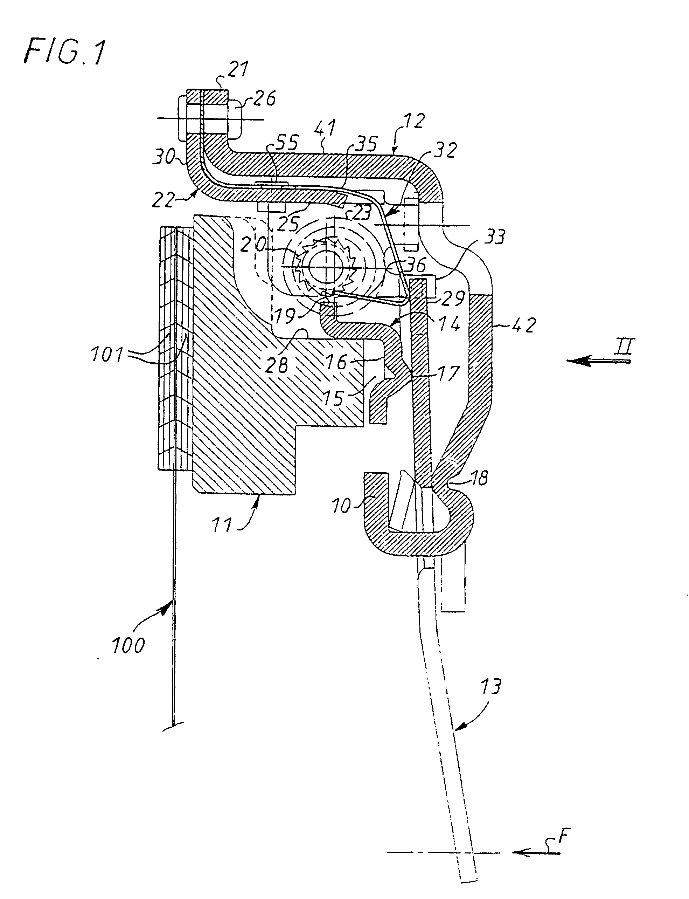

En se reportant aux figures 1 à 4, on voit un mécanisme d'embrayage à friction, notamment pour véhicule automobile, qui comprend un plateau de pression 11 destiné à coopérer avec un disque de friction 100 esquissé sur la figure 1, constitué d'un voile ou disque de support portant ici à sa périphérie externe des garnitures de friction 101 et coopérant lui-même avec un plateau de réaction. Le plateau de réaction, non représenté, appartient à un volant moteur destiné à être calé en rotation sur un arbre menant, tel que le vilebrequin du moteur à combustion interne. Le disque de friction 100 est solidaire en rotation d'un arbre mené tel que l'arbre d'entrée de la boîte de vitesses par l'intermédiaire d'un moyeu porté par le voile à sa périphérie interne.

Le plateau de pression 11 en matière moulable, ici de la fonte, est solidaire en rotation d'un couvercle 12 de forme creuse, de manière connue, par l'intermédiaire de languettes tangentielles non représentées qui, axialement élastiques, constituent en même temps des moyens de rappel du plateau de pression 11 vers le couvercle 12, de forme creuse et en tôle emboutie. Le couvercle 12 est ici en forme d'assiette creuse et comporte un fond 42, globalement d'orientation transversale, relié par une jupe annulaire d'orientation axiale 41, à un rebord radial de fixation au plateau de réaction. Ce rebord 21 est fractionné en plages décalées axialement.

Le plateau de pression 11, tout en étant solidaire en rotation du couvercle 12, est donc déplaçable axialement par rapport au couvercle 12 sous la sollicitation de moyens élastiques à action axiale commandés, ici un diaphragme 13 articulé sur le couvercle 12 grâce à des pattes 10 issues de la périphérie interne du fond 42 du couvercle 12 et à des emboutis 18 en forme d'arcs de cercle, ménagés dans le fond 42 du couvercle 12, offrant un appui primaire au diaphragme 13, l'embrayage étant ici du type poussé, l'opération de débrayage étant effectuée en agissant sur l'extrémité des doigts du diaphragme 13 dans le sens de la flèche F de la figure 1 sur laquelle l'embrayage est représenté engagé. Plus précisément, les pattes 10 portent ici une couronne-jonc, non référencée, en sorte que le diaphragme 13 est monté à articulation entre l'appui primaire 18 et la périphérie externe de la couronne-jonc permettant de serrer élastiquement le diaphragme contre l'appui primaire 18.

Pour maintenir, lorsque l'embrayage est embrayé, les moyens élastiques à action axiale 13 dans une position indépendante de l'usure des garnitures 101 du disque de friction 100, et dans une moindre mesure l'usure des plateaux de pression 11 et de réaction dont les faces, dites de friction, s'usent au contact des garnitures 101 du disque 100, il est prévu un dispositif de rattrapage d'usure qui comprend des moyens à rampes 14 munis de rampes 16 disposées circonférentiellement ; plus précisément, ces moyens à rampes 14 sont constitués d'un anneau présentant des rampes 16 disposées circonférentiellement sur sa face tournée vers le plateau de pression 11 ; sur sa face opposée, ledit anneau présente une zone d'appui 17 dit secondaire constituée par une arête supérieure arrondie disposée en arc de cercle centré sur l'axe de l'embrayage. Bien entendu, ladite zone d'appui secondaire 17 peut être continue ou discontinue. Cet appui est implanté radialement au-dessus de l'appui primaire 18.

Le plateau de pression 11 présente, sur sa face tournée vers le fond 42 du couvercle 12, une face d'appui transversale portant des moyens de contre-rampes portant des contre-rampes 15, ici en forme de plots, circonférentiellement à une distance l'un de l'autre qui correspond à celle qui sépare circonférentiellement deux rampes 16 successives, les contre-rampes 15 étant destinées à coopérer chacune avec une rampe 16.

Les moyens à rampes 14 sont placés axialement entre le diaphragme 13 et les moyens de contre-rampes en sorte que les contre-rampes 15 reçoivent les rampes 16 et le diaphragme 13 coopère avec la zone d'appui secondaire 17 qui constitue ainsi les moyens d'appui par l'intermédiaire desquels le diaphragme 13 agit sur le plateau de pression 11.

La périphérie externe des moyens à rampes 14 est munie d'un seul tenant d'une denture 19. Ici, la denture 19 est réalisée par découpage d'un bord d'une tôle découpée et pliée constituant les moyens à rampes 14. La face d'appui du plateau de pression 11 où sont ménagés les plots 15 a un bord cylindrique 28 circonférentiel sur la périphérie externe duquel sont centrés les moyens à rampes 14 présentant pour ce faire un rebord annulaire d'orientation axiale, d'une part, en contact intime avec le bord 28, et, d'autre part, reliant la denture 19 aux rampes 14, l'ensemble appartenant ici à un anneau en tôle emboutie.

Le dispositif de rattrapage d'usure comprend par ailleurs une roue à rochet 20 à dents inclinées montée tournante autour d'un axe 27 qui porte également une vis sans fin 23 ; le filet et le pas de la vis sans fin 23 sont adaptés à la denture 19 des moyens à rampes 14 ; la vis sans fin 23 est amenée à coopérer avec la denture 19 dans les conditions qui seront décrites ci-après.

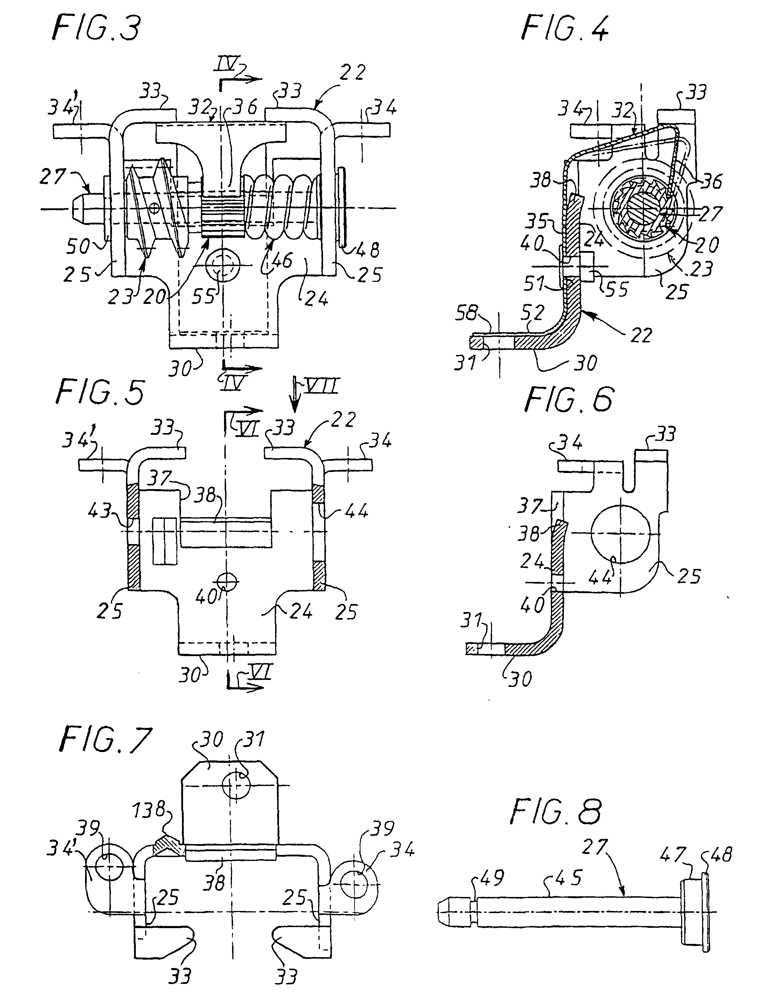

L'axe 27 est porté à rotation par un support 22 en tôle découpée et pliée, en forme générale de U ayant une âme 24 et deux ailes 25, adaptées à supporter l'axe 27. Le support 22, mieux visible sur les figures 5 à 7, est fixé au couvercle 12 par son âme 24 et ses ailes 25 ; plus précisément, l'âme 24 présente un trou 40 et se prolonge au-delà des ailes 25 en présentant un retour 30 transversal s'étendant globalement perpendiculairement par rapport à l'âme 24 et aux ailes 25 et muni d'un trou 31 ; du côté opposé à ce prolongement, le bord de l'âme 24 est découpé centralement par une échancrure 37 au fond de laquelle est ménagé un demi-crevé 38 dont l'extrémité est arrondie, sa concavité étant dirigée vers l'intérieur des ailes 25.

Le bord de chaque aile 25, placé du côté où se situe l'échancrure 37, est découpé en sorte que sont aménagées deux pattes, une patte 33 dite de butée et une patte 34 respectivement 34' dite de fixation, munie d'un trou 39 ; les deux pattes de fixation 34, 34' sont dirigées vers l'extérieur des ailes 25 et les deux pattes de butée 33 vers l'intérieur ; les deux pattes de fixation 34, 34' s'étendent dans un plan globalement perpendiculaire à l'âme 24 et aux ailes 25 ; il en est de même des deux pattes de butée 33 ; ici, le plan de celles-ci est décalé vers l'extérieur par rapport au plan des pattes de fixation 34, 34'.

Chacune des ailes 25 est munie d'un trou, respectivement 43 et 44, le trou 44 étant d'un diamètre plus grand que celui du trou 43.

L'axe 27, représenté seul sur la figure 8, comprend un corps 45 cylindrique muni à une de ses extrémités d'une tête 47 cylindrique de plus grand diamètre, elle-même bordée d'un rebord cylindrique 48 d'un diamètre encore plus grand.

Au voisinage de son extrémité opposée à celle qui porte la tête 47, le corps 45 présente une gorge 49.

Le trou 44 d'une aile 25 du support 22 est adapté à recevoir la tête 47 et le trou 43 de l'autre aile 25 le corps 45 de l'axe 27. Lorsque l'axe 27 est monté sur le support 22, figure 3, le rebord 48 est adapté à coopérer avec la face externe de l'aile 25 correspondante, le diamètre du rebord 48 étant plus grand que celui du trou 44 ; le corps 45 s'étend alors au-delà de l'autre aile 25 ainsi que sa gorge 49 adaptée à recevoir un circlips 50 ou jonc d'arrêt ; ainsi, l'axe 27 est retenu axialement dans les deux sens par rapport au support 22 par le circlips 50 et le rebord 48.

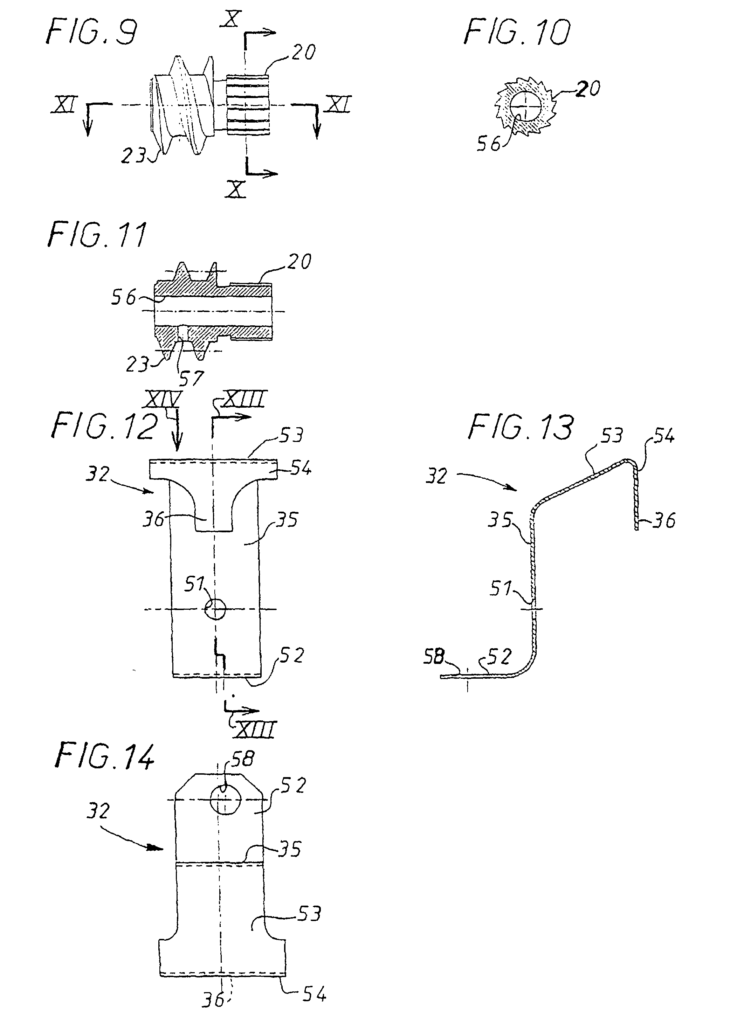

La vis sans fin 23 et la roue à rochet 20 sont ici d'une seule pièce, figures 9 à 11; un alésage cylindrique axial 56 permet le montage de cette pièce sur l'axe 27 ; un trou transversal 57 au droit de la vis sans fin 23 permet le repérage de celle-ci et facilite sa mise en position initiale ; bien entendu, la vis sans fin 23 et la roue à rochet 20 pourraient être des pièces distinctes et pourvues d'un alésage, ledit alésage et l'axe 27 lui-même étant agencés de telle sorte que la vis sans fin 23 et la roue à rochet 20 peuvent coulisser le long de l'axe 27 tout en étant solidaires en rotation dudit axe 27. En variante, l'une de ces deux pièces 20 ou 23 est d'une seule pièce avec l'axe 27.

Un organe élastique 32, ici métallique et de plus faible épaisseur que le support, ayant en coupe axiale une forme générale de U, comprend deux ailes 35, 36 d'orientation axiale dont une aile 35 qui est munie d'un trou 51 pour sa fixation et se prolonge selon une languette 52 globalement perpendiculaire dirigée vers l'extérieur du U et munie d'un trou 58 pour sa fixation , ici par un rivet 26 qui fixe le support 22, sur un rebord 21 transversal du couvercle 12 qui borde sa jupe 41 en étant globalement parallèle à son fond 42, le trou 58 de la languette 52 correspondant au trou 31 du retour 30 de l'âme 24 du support 22 ; l'autre aile 36 de l'organe élastique 32 est conformée en languette de commande et s'étend ici globalement parallèlement à l'axe de l'embrayage ; comme cela est mieux visible sur les figures 12 à 14 représentant l'organe élastique 32 seul, l'extrémité de la languette de commande 36 est rétrécie, sa largeur étant globalement adaptée à celle des dents de la roue à rochet 20 ; la largeur courante de l'organe élastique 32 est adaptée à la largeur de l'échancrure 37 du support 22 dans laquelle il s'inscrit ; l'âme 53 du U de l'organe élastique 32, qui relie ses ailes 35 et 36, présente au droit de son raccordement avec l'aile 36, ou languette de commande, une zone élargie 54 adaptée à venir élastiquement en butée sur les pattes 33, ou butée de contrôle, du support 22, comme cela est visible sur les figures 3 et 4 ; lorsque l'organe élastique 32 et la roue à rochet 20 sont montés sur le couvercle 12, la languette de commande 36 coopère élastiquement avec un pied de dent de la roue à rochet 20.

Autour de l'axe 27 est placé un ressort hélicoïdal 46 de compression constituant le moyen élastique de rattrapage, comme décrit ci-dessous ; ici, le ressort 46 est placé axialement entre la roue à rochet 20 et une aile 25 du support 22.

On appréciera que le support 22 équipé de la vis sans fin 23, la roue à rochet 20, le ressort 46, l'axe 27 et l'organe élastique 32 constitue un sous-ensemble prêt à être monté sur le couvercle 12 de l'embrayage ; un tel sous-ensemble est montré sur les figures 3 et 4 ; la forme décrite ci-dessus de l'organe élastique 32 permet à son aile 35 de fixation et sa languette 52 d'être plaquées sur les faces extérieures de l'âme 24 et du retour 30 de celle-ci, respectivement, les trous 40 du support 22 et 51 de l'organe élastique 32 étant en coïncidence ; cette coïncidence permet de fixer l'organe élastique 32 sur le support 22, ici par un rivet 55. En variante, cette fixation est réalisée par clipsage. Grâce au demi-crevé 38 dont la concavité est tournée vers l'intérieur des ailes 25 du support 22, l'organe élastique 32 peut sans dommage se débattre élastiquement dans les conditions expliquées ci-dessous, sa languette de commande 36 étant de grande longueur.

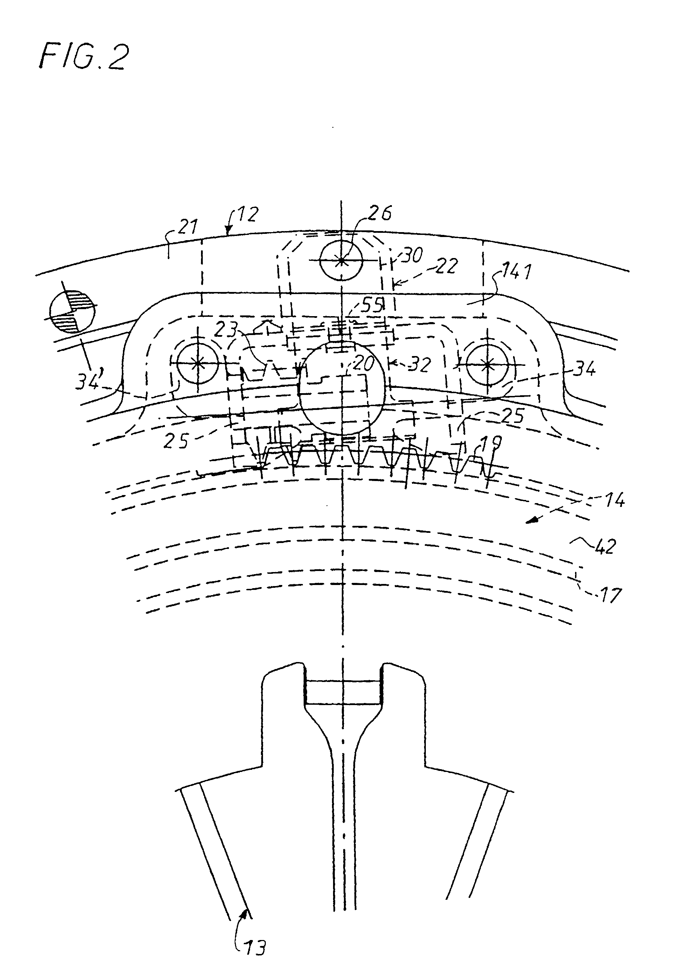

Le support 22 portant la roue à rochet 20, la vis sans fin 23 et le ressort hélicoïdal 46 étant solidaire du couvercle 12, le diaphragme 13 se déplace par rapport à lui, donc par rapport à la languette de commande 36, lors des opérations de débrayage et de ré-embrayage ; le diaphragme 13 porte à sa périphérie un appendice radial dit actionneur 29, figures 1 et 2, s'étendant radialement à l'extérieur de la partie rondelle Belleville du diaphragme 13 pour coopérer avec la languette de commande 36 de l'organe élastique 32 ; on comprendra que, grâce à cette disposition, lors du basculement du diaphragme 12 lors des opérations de ré-embrayage, celui-ci déplace la languette de commande 36 de la droite vers la gauche, par rapport à la figure 1, et, par coopération avec les dents de la roue à rochet 20, l'extrémité de la languette de commande 36 est amenée à faire tourner la roue à rochet 20 dans le sens horaire ; lors du débrayage, l'élasticité de l'organe élastique 32 et l'inclinaison des dents de la roue à rochet 20 font que la languette de commande 36 monte sur les dents de celle-ci.

Le dispositif de rattrapage d'usure qui vient d'être décrit fonctionne comme suit.

La figure 1 représente schématiquement l'embrayage engagé, les garnitures 101 du disque de friction 100 étant à l'état neuf et serrées entre le plateau de réaction, non représenté, et le plateau de pression 11. Dans cette position, la languette de commande 36 a son extrémité au pied d'une dent de la roue à rochet 20.

Lorsque l'embrayage est débrayé, l'extrémité des doigts du diaphragme 13 est sollicitée dans le sens de la flèche F en éloignement du fond 42 du couvercle 12 ; le diaphragme 13 bascule autour de l'appui primaire 18 sous l'action du serrage élastique exercée par la couronne-jonc ; dans son déplacement, la périphérie externe du diaphragme 13 libère progressivement le plateau de pression 11 et son actionneur 29 la languette de commande 36, respectivement ; l'extrémité de la languette de commande 36 suit la rampe inclinée constituée par la dent dans le pied de laquelle elle se trouvait dans l'étape précédente, les dents de la roue à rochet 20 étant réalisées en sorte que, lors de cette course de débrayage garnitures neuves, l'extrémité de la languette de commande 36 ne saute pas une dent ; ceci est obtenu par la venue en butée de l'élément élastique 32, donc de sa languette de commande 36, contre une butée 33, dite de contrôle, du support 22 ; avantageusement, comme mieux visible sur la figure 2, il y a deux pattes 33 espacées circonférentiellement permettant entre elles le passage de l'actionneur 29.

Lorsque les garnitures s'usent, comme on le sait le plateau de pression 11, toujours soumis à l'effort axial du diaphragme 13, se rapproche du plateau de réaction qui est fixe axialement comme le couvercle 12 ; l'actionneur 29 du diaphragme 13 se rapproche donc du plateau de réaction, en entraînant dans son mouvement la languette de commande 36 ; la roue à rochet 20 tourne autour de son axe dans le sens horaire ; cet entraînement en rotation de la roue à rochet 20 conduit la vis sans fin 23 à tourner également sur son axe ; les moyens à rampes 14 étant immobilisés en rotation sous l'effet de la charge du diaphragme 13, la vis sans fin 23 qui engrène avec la denture 19 se visse en quelque sorte sur cette denture 19 en comprimant le ressort hélicoïdal 46, le sens du filet de la vis sans fin 23 étant prévu en sorte qu'il en soit ainsi.

Lors de l'opération de débrayage qui suit la phase d'usure qui vient d'être décrite, le plateau de pression 11 libère les garnitures 101 en s'éloignant d'elles sous l'action des languettes tangentielles qui ramènent vers le fond 42 du couvercle 12 le plateau de pression 11 ainsi que les moyens à rampes 14 en contact avec le diaphragme 13 par leurs zones d'appui secondaire 17 et avec les plots 15 par leurs rampes 16. Le ressort hélicoïdal 46 sollicite la vis sans fin 23 vers l'aile 25 du support 22, dont elle s'est éloignée en phases d'usure, c'est-à-dire de la droite vers la gauche par rapport à la figure 3 ; la charge du diaphragme 13 n'étant plus appliquée sur les moyens à rampes 14, le seul effort à vaincre pour pouvoir faire tourner ces moyens à rampes 14 par rapport au plateau de pression 11 est l'effort de rappel des languettes tangentielles ; si la charge du ressort hélicoïdal 46 est suffisante pour vaincre cet effort, alors le ressort 46 déplace la vis sans fin 23 qui est empêchée de tourner sur elle-même par la pression de la languette de commande 36 et qui entraînera la denture 19 : en tournant sur elles-mêmes, les rampes 16, par coopération avec les plots 15 fixes relativement, éloigneront le plateau de pression 11 du fond 42 du couvercle 12, augmentant ainsi la distance axiale entre la face de travail du plateau de pression 11 et les zones d'appui secondaire 17 des moyens à rampes 14, rattrapant ainsi au moins en partie le déplacement du plateau de pression 11 dû à l'usure des garnitures 101. La charge du ressort hélicoïdal 46 étant fonction de la quantité dont il aura été comprimé par la vis sans fin 23 durant les phases d'usure, on voit que plusieurs opérations d'embrayage et de débrayage peuvent être nécessaires avant que le dispositif de rattrapage de jeu n'entre en phase de rattrapage proprement dite, ceci étant fonction du dimensionnement relatif des pièces concernées.

Si l'usure a été suffisante pour que la roue à rochet 20 ait tourné suffisamment pour qu'au retour la languette de commande 36, dont la course de retour est limitée par la butée de contrôle 33, saute une dent, lors de l'opération d'embrayage qui suit la languette de commande 36 fait tourner la roue à rochet 20 et les moyens à rampes 14, non encore serrés par le diaphragme 13, tournent et rattrapent l'usure ; en fin d'opération de rattrapage, dans la position embrayage engagé le diaphragme 13, la roue à rochet 20, et la languette de commande 36 retrouvent leur position qu'ils occupaient à la figure 1.

Bien entendu, on peut remplacer les pattes et la couronne-jonc par des colonnettes à tête profilée offrant un appui en vis-à-vis de l'appui primaire 18.

En variante, la denture 19 appartient à une pièce distincte des moyens à rampes. Cette pièce intermédiaire présente à sa périphérie interne des dents pénétrant dans des évidements réalisés dans le rebord annulaire d'orientation axiale que présentent les moyens à rampes au-delà de l'appui secondaire 17. Ce rebord (non référencé) coopère avec le bord cylindrique 28. La denture est ainsi solidaire en relation des moyens à rampes 14, tout en pouvant se déplacer par rapport à ceux-ci par une liaison du type tenons-mortaises.

Bien entendu, la pièce intermédiaire est calée axialement sur le couvercle, par exemple par des prolongements de deux languettes axialement élastiques liant en rotation le plateau de pression 11 au couvercle 12, et ce avec mobilité axiale.

En variante, des languettes axialement élastiques lient en rotation la pièce intermédiaire aux moyens à rampes.

Grâce à l'invention l'organe élastique 32 est sans contact avec les ailes 25 du support et subit moins de contraintes. L'organe élastique 32 est fixé à l'âme 24 du support 22 de manière indépendante de la fixation de l'âme 24 au couvercle 12.

Comme visible à la figure 2, la jupe du couvercle 12 est déformée localement en 141 pour formation d'un logement à section en forme de U avec un fond doté de trous pour la fixation par rivetage des pattes 34, 34' au couvercle 12. Les pattes 24, 24' sont ici différentes car ici la vis sans fin 23 s'étend tangentiellement par rapport à la denture 19 pour un bon rendement et diminuer les frottements.

Ainsi, les trous de fixation réalisés dans le fond du logement du couvercle sont adaptés à la fixation du support 22 portant une vis 23 s'étendant tangentiellement à la denture 19 ou à un support portant une vis ne s'étendant pas tangentiellement par rapport à la denture 19.

Dans le premier cas les pattes 34, 34' sont différentes, dans le second cas les pattes sont identiques.

Bien entendu en modifiant les trous de fixation précités, les pattes 34 peuvent être identiques tout en ayant une vis 23 s'étendant tangentiellement par rapport à la denture 19.

Comme visible dans les figures 7 et 2 l'âme 24 du couvercle 12 porte un bossage 138 destiné à coopérer avec l'âme du logement en sorte que le support est stable et est peu sensible aux phénomènes de la force centrifuge, son bossage 138 venant alors en contact avec l'âme du logement 141.

Bien entendu, on peut inverser les structures, le bossage provenant alors de l'âme du logement 141. L'inclinaison du support est donc bien garantie.

## Revendications

1. Embrayage à friction comportant un plateau de réaction destiné à être calé en rotation sur un arbre menant, un disque de friction (100), portant à sa périphérie externe au moins une garniture de friction (101), destiné à être calé en rotation sur un arbre mené, un plateau de pression (11), un couvercle (12) fixé sur le plateau de réaction, des moyens embrayeurs à action axiale (13) qui sont commandés par des moyens débrayeurs et qui agissent entre, d'une part, le couvercle (12) et, d'autre part, le plateau de pression (11) par l'intermédiaire de moyens d'appui secondaire (17) et primaire (18), le plateau de pression (11) étant solidaire en rotation du couvercle (12) tout en pouvant se déplacer axialement par rapport à lui et étant soumis à l'action de moyens élastiques de rappel rappelant le plateau de pression (11) axialement vers le couvercle (12), ledit embrayage comportant également un dispositif de rattrapage d'usure comprenant des moyens à rampes (14) dont les rampes (16) sont disposées circonférentiellement, placés axialement entre les moyens d'appui (17) et le plateau de pression (11), et adaptés à coopérer avec des moyens de contre-rampes (15), une denture (19) avec laquelle coopère une vis sans fin (23) disposée tangentiellement, les moyens à rampes (14) étant solidaires en rotation de ladite denture (19), des moyens d'entraînement en rotation (20) de la vis sans fin (23) étant prévus, rendus opérationnels par l'usure de la ou des garnitures de friction (101) lorsque l'embrayage est embrayé, constitués par une roue à rochet solidaire en rotation de la vis sans fin (23) et commandés par l'intermédiaire d'une languette de commande (36) que présente un organe élastique (32), la vis sans fin (23) et la roue à rochet (20) étant portées par un support (22), le support (22) et l'organe élastique (32) étant solidaires du couvercle (12) en étant placés à l'intérieur de celui-ci, le support (22) étant en forme de U ayant une âme (24) et deux ailes (25) adaptées à supporter un axe (27) portant la vis sans fin (23) et la roue à rochet (20), **caractérisé par le fait que** l'organe élastique (32) est fixé (55) à l'âme (24) du support (22) indépendamment de la fixation du support au couvercle.

2. Embrayage à friction selon la revendication 1, **caractérisé par le fait que** l'organe élastique (32) est disposé, au moins en partie, dans la zone où il est fixé au support (22), entre l'âme (24) du support (22) et le couvercle (12).

3. Embrayage à friction selon la revendication 2, **caractérisé par le fait que** l'organe élastique (32) a en coupe axiale une forme générale de U et comprend deux ailes (35, 36) d'orientation axiale dont une (35) est munie d'un trou (51) pour sa fixation au support (22), par exemple par rivetage ou clipsage, et dont l'autre (36) est conformée en languette de commande en s'étendant globalement parallèlement à l'axe de l'embrayage.

4. Embrayage à friction selon la revendication 3, **caractérisé par le fait que** l'âme (24) du support (22) se prolonge au delà des ailes (25) en présentant un retour (30) transversal s'étendant globalement perpendiculairement par rapport à l'âme (24) et aux ailes (25), et l'aile (35), de fixation au support (22), de l'organe élastique (32) se prolonge selon une languette (52) globalement perpendiculaire dirigée vers l'extérieur du U fixée, ainsi que le retour (30) du support (22), sur un rebord (21) transversal du couvercle (12).

5. Embrayage à friction selon la revendication 2, **caractérisé par le fait que** la course, par rapport à la roue à rochet (20), lors de l'opération de débrayage, de la languette de commande (36) est limitée par une butée de contrôle (33) constituée par au moins une patte découpée dans le support (22).

6. Embrayage à friction selon la revendication 5, **caractérisé par le fait que** le bord de l'âme (24) du support (22) est découpé centralement par une échancrure (37) ayant une largeur à laquelle est adaptée la largeur courante de l'organe élastique (32) qui s'inscrit dans l'échancrure (37).

7. Embrayage à friction selon la revendication 6, **caractérisé par le fait qu'**au fond de l'échancrure (37) est ménagé un demi-crevé (38) dont l'extrémité est arrondie, sa concavité étant dirigée vers l'intérieur des ailes (25) du support (22).

8. Embrayage à friction selon la revendication 3, **caractérisé par le fait que** l'âme (53) de l'organe élastique (32), qui relie ses ailes (35,36), présente au droit de son raccordement avec l'aile (36) conformée en languette de commande une zone élargie (54) adaptée à venir en butée sur la butée de contrôle (33) du support (22).

9. Embrayage à friction selon la revendication 5, **caractérisé par le fait que** les moyens embrayeurs à action axiale sont constitués par un diaphragme (13).

10. Embrayage à friction selon la revendication 9, **caractérisé par le fait que** les moyens d'appui primaire (18) sont constitués d'un embouti circonférentiel, continu ou fragmenté, du fond (42) du couvercle (12).

11. Embrayage à friction selon la revendication 9, **caractérisé par le fait que** la roue à rochet (20) est commandée par le diaphragme (13) par l'intermédiaire de la languette de commande (36).

12. Embrayage à friction selon la revendication 11, **caractérisé par le fait que** la roue à rochet (20) est commandée par un actionneur (29) constitué par un appendice que présente le diaphragme (13) à sa périphérie externe.

13. Embrayage à friction selon la revendication 12 , **caractérisé par le fait que** deux pattes (33) sont prévues, espacées circonférentiellement par un passage pour l'actionneur (29).

14. Embrayage à friction selon la revendication 1, **caractérisé par le fait que** les moyens à rampes (14) sont constitués d'un anneau présentant axialement, d'un côté, les rampes (16) inclinées et réparties circonférentiellement et, de l'autre côté, les moyens d'appui secondaire (17).

15. Embrayage à friction selon la revendication 1, **caractérisé par le fait que** les moyens de contre-rampes (15) consistent en des plots destinés à coopérer avec les rampes (16) des moyens à rampes (14).

16. Embrayage à friction selon la revendication 1, **caractérisé par le fait que** la vis sans fin (23) est montée déplaçable selon son axe en étant soumise à l'action d'un moyen élastique dit de rattrapage (46).

## Claims

1. A friction clutch comprising a reaction plate adapted to be mounted in rotation on a driving shaft, a friction disc (100) carrying at its outer periphery at least one friction liner (101) and adapted to be mounted in rotation on a driven shaft, a pressure plate (11), a cover plate (12) fixed on the reaction plate, axially acting clutch-engaging means (13) which are controlled by declutching means and which work between the cover plate (12) on the one hand and the pressure plate (11) on the other hand, through secondary abutment means (17) and primary abutment means (18), the pressure plate (11) being fixed in rotation to the cover plate (12) while being displaceable axially with respect to the latter and being subjected to the action of resilient return means which urge the pressure plate (11) axially towards the cover plate (12), the said clutch further including a wear compensating device comprising ramp means (14), the ramps (16) of which are disposed circumferentially and which is placed axially between the abutment means (17) and the pressure place (11) and adapted to cooperate with counter-ramp means (15), a set of teeth (19) with which a worm (23), disposed tangentially is in cooperation, the ramp means (14) being fixed in rotation to the said set of teeth (19), means (20) being provided for driving the worm (23) in rotation and being operated in response to wear in the friction liner or liners (101) when the clutch is engaged, the said worm driving means consisting of a ratchet wheel which is fixed in rotation to the worm (23) and controlled through a control tongue (36) which is part of a resilient member (32), the worm (23) and the ratchet wheel (20) being carried by a support member (22), the support member (22) and the resilient member (32) being fixed to the cover plate (12) and being placed inside the latter, the support member (22) being U-shaped with a spine (24) carrying the worm (23) and the ratchet wheel (20),
**characterised by** the fact that the resilient member (32) is fixed (55) to the spine (24) of the support member (22) independently of the fastening of the support member to the cover plate.

2. A friction clutch according to Claim 1,
**characterised by** the fact that the resilient member (32) is disposed at least partly in the zone in which it is fixed to the support member (22), between the spine (24) of the support member (22) and the cover plate (12).

3. A friction clutch according to Claim 2,
**characterised by** the fact that the resilient member (32) is generally U-shaped in axial cross section and comprises two axially oriented wings (35, 36), one of which (35) is formed with a hole (51) for fastening it to the support member (22), for example by riveting or clipping, the other one (36) being configured as a control tongue and extending generally parallel to the axis of the clutch.

4. A friction clutch according to Claim 3,
**characterised by** the fact that the spine (24) of the support member (22) is extended, beyond the wings (25), by a transverse flange (30) extending generally at right angles to the spine (24) and wings (25), while the wing (35) of the resilient member (32), fastening the latter to the support member (22), is extended by a generally perpendicular tongue (52) which extends outwards from the fixed U, and, with the flange (30) of the support member (22), lies against a transverse flange (21) of the cover plate (12).

5. A friction clutch according to Claim 2,
**characterised by** the fact that the course of travel of the control tongue (36) with respect to the ratchet wheel (20), during the operation of disengaging the clutch, is limited by a control abutment (33) defined by at least one lug formed by being pressed out in the support member (22).

6. A friction clutch according to Claim 5,
**characterised by** the fact that the edge of the spine (24) of the support member (22) is cut out in the centre as a slot (37) having a width with which the corresponding width of the resilient member (32), which is fitted in the slot (37), is matched.

7. A friction clutch according to Claim 6,
**characterised by** the fact that a lip (38) is formed at the base of the slot (37), the lip having a rounded end and a concavity directed towards the inside of the wings (25) of the support member (22).

8. A friction clutch according to Claim 3,
**characterised by** the fact that the spine (53) of the resilient member (32), which joins its wings (35, 36) together, has, in line with its junction with the wing (36) which is configured as a control tongue, a widened zone (54) which is adapted to come into abutment on the control abutment (33) of the support member (22).

9. A friction clutch according co Claim 5,
**characterised by** the fact that the axially acting clutch engaging means consist of a diaphragm (13).

10. A friction clutch according to Claim 9,
**characterised by** the fact that the primary abutment means (18) consist of a circumferential press-formed element, continuous or fragmented, formed in the base portion (42) of the cover plate (12).

11. A friction clutch according to Claim 9,
**characterised by** the fact that the ratchet wheel (20) is controlled by the diaphragm (13). through the control tongue (36).

12. A friction clutch according to Claim 11,
**characterised by** the fact that the ratchet wheel (20) is controlled by an actuator (29) consisting of an appendix of the diaphragm (13) at its outer periphery.

13. A friction clutch according to Claim 12,
**characterised by** the fact that two lugs (33) are provided, and are spaced circumferentially apart by a passage for the actuator (29).

14. A friction clutch according to Claim 1,
**characterised by** the fact that the ramp means (14) consist of an annular ring having, on one axial side, the inclined ramps (16) which are spaced apart circumferentially, and on the other axial side, the secondary abutment means (17).

15. A friction clutch according to Claim 1,
**characterised by** the fact that the counter-ramp means (15) consist of pads adapted to cooperate with the ramps (16) of the ramp means (14).

16. A friction clutch according to Claim 1,
**characterised by** the fact that the worm (23) is mounted for displacement along its axis when subjected to the action of a so-called resilient take-up means (46).

## Patentansprüche

1. Reibungskupplung, umfassend eine Gegenanpreßplatte, die zur drehfesten Anbringung an einer treibenden Welle bestimmt ist, eine Kupplungsscheibe (100), die an ihrem äußeren Umfang wenigstens einen Reibbelag (101) trägt und die zur drehfesten Anbringung an einer getriebenen Welle bestimmt ist, eine Druckplatte (11), einen an der Gegenanpreßplatte befestigten Deckel (12) und axial wirksame Einrückmittel (13), die durch Ausrückmittel betätigt werden und die zwischen dem Deckel (12) einerseits und der Druckplatte (11) andererseits über Sekundär- (17) und Primärauflagemittel (18) wirken, wobei die Druckplatte (11) drehfest mit dem Deckel (12) verbunden ist, während sie sich axial im Verhältnis zu diesem verschieben kann, und der Wirkung von elastischen Rückstellmitteln ausgesetzt ist, die die Druckplatte (11) axial zum Deckel (12) hin zurückstellen, wobei die Kupplung außerdem eine Verschleißnachstellvorrichtung aufweist, umfassend Rampenmittel (14), deren Rampen (16) in Umfangsrichtung und axial zwischen den Auflagemitteln (17) und der Druckplatte (11) zur Zusammenwirkung mit Gegenrampenmitteln (15) angeordnet sind, und eine Zahnung (19), mit der eine tangential angeordnete Schnecke (23) zusammenwirkt, wobei die Rampenmittel (14) drehfest mit der besagten Zahnung (19) verbunden sind, wobei Drehantriebsmittel (20) für die Schnecke (23) vorgesehen sind, die durch den Verschleiß des bzw. der Reibbeläge (101) bei eingerückter Kupplung betriebsbereit werden, die ein drehfest mit der Schnecke (23) verbundenes Sperrzahnrad enthalten und über eine Betätigungszunge (36) betätigt werden, die ein elastisches Organ (32) aufweist, wobei die Schnecke (23) und das Sperrzahnrad (20) an einem Träger (22) gelagert sind, wobei der Träger (22) und das elastische Organ (32) fest mit dem Deckel (12) verbunden und in dessen Innern angeordnet sind, und wobei der Träger (22) eine U-Form mit einem Steg (24) und zwei Schenkeln (25) zur Lagerung einer die Schnecke (23) und das Sperrzahnrad (20) tragende Achse (27) aufweist,
**dadurch gekennzeichnet, daß** das elastische Organ (32) unabhängig von der Befestigung des Trägers am Deckel am Steg (24) des Trägers (22) befestigt (55) ist.

2. Reibungskupplung nach Anspruch 1, **dadurch gekennzeichnet, daß** das elastische Organ (32), wenigstens teilweise, in dem Bereich angeordnet ist, in dem es am Träger (22) zwischen dem Steg (24) des Trägers (22) und dem Deckel (12) befestigt ist.

3. Reibungskupplung nach Anspruch 2, **dadurch gekennzeichnet, daß** das elastische Organ (32) im Axialschnitt eine allgemeine U-Form aufweist und zwei axial ausgerichtete Schenkel (35, 36) umfaßt, von denen einer (35) mit einem Loch (51) für seine Befestigung am Träger (22), beispielsweise durch Aufnieten oder Aufklippsen, versehen ist, während der andere (36) als Betätigungszunge gestaltet ist, wobei er sich im wesentlichen parallel zur Achse der Kupplung erstreckt.

4. Reibungskupplung nach Anspruch 3, **dadurch gekennzeichnet, daß** sich der Steg (24) des Trägers (22) über die Schenkel (25) hinaus verlängert, wobei er einen querverlaufenden Rücksprung (30) aufweist, der sich insgesamt senkrecht im Verhältnis zum Steg (24) und zu den Schenkeln (25) erstreckt, und daß sich der Schenkel (35) des elastischen Organs (32) zur Befestigung am Träger (22) entsprechend einer zur Außenseite des U gerichteten, insgesamt senkrechten Zunge (52) verlängert, die ebenso wie der Rücksprung (30) des Trägers (22) an einer Querrandleiste (21) des Deckels (12) befestigt ist.

5. Reibungskupplung nach Anspruch 2, **dadurch gekennzeichnet, daß** der auf das Sperrzahnrad (20) bezogene Verstellweg der Betätigungszunge (36) beim Ausrückvorgang durch einen Kontrollanschlag (33) begrenzt wird, der aus wenigstens einem aus dem Träger (22) ausgeschnittenen Ansatz besteht.

6. Reibungskupplung nach Anspruch 5, **dadurch gekennzeichnet, daß** der Rand des Stegs (24) des Trägers (22) mittig durch eine Aussparung (37) ausgeschnitten ist, die eine Breite aufweist, die an die durchgehende Breite des elastischen Organs (32) angepaßt ist, das in die Aussparung (37) eingreift.

7. Reibungskupplung nach Anspruch 6, **dadurch gekennzeichnet, daß** in den Boden der Aussparung (37) ein Teilkragen (38) eingearbeitet ist, dessen Ende abgerundet ist, wobei seine Hohlfläche zum Innern der Schenkel (25) des Trägers (22) gerichtet ist.

8. Reibungskupplung nach Anspruch 3, **dadurch gekennzeichnet, daß** der Steg (53) des elastischen Organs (32), der seine Schenkel (35, 36) verbindet, in Höhe seines Anschlusses an den als Betätigungszunge gestalteten Schenkel (36) einen verbreiterten Bereich (54) aufweist, der am Kontrollanschlag (33) des Trägers (22) zum Anschlag kommen kann.

9. Reibungskupplung nach Anspruch 5, **dadurch gekennzeichnet, daß** die Einrückmittel aus einer Membranfeder (13) bestehen.

10. Reibungskupplung nach Anspruch 9, **dadurch gekennzeichnet, daß** die Primärauflagemittel (18) aus einer durchgehenden oder unterteilten Umfangsausbuchtung des Bodens (42) des Deckels (12) bestehen.

11. Reibungskupplung nach Anspruch 9, **dadurch gekennzeichnet, daß** das Sperrzahnrad (20) über die Betätigungszunge (36) durch die Membranfeder (13) betätigt wird.

12. Reibungskupplung nach Anspruch 11, **dadurch gekennzeichnet, daß** das Sperrzahnrad (20) durch ein Stellglied (29) betätigt wird, das aus einem Fortsatz besteht, den die Membranfeder (13) an ihrem äußeren Umfang aufweist.

13. Reibungskupplung nach Anspruch 12, **dadurch gekennzeichnet, daß** zwei Ansätze (33) vorgesehen sind, die durch einen Durchgang für das Stellglied (29) umfangsmäßig beabstandet sind.

14. Reibungskupplung nach Anspruch 1, **dadurch gekennzeichnet, daß** die Rampenmittel (14) aus einem Ring bestehen, der axial auf der einen Seite die geneigten und umfangsmäßig verteilten Rampen (16) und auf der anderen Seite die Sekundärauflagemittel (17) aufweist.

15. Reibungskupplung nach Anspruch 1, **dadurch gekennzeichnet, daß** die Gegenrampenmittel (15) aus Sockeln bestehen, die für das Zusammenwirken mit den Rampen (16) der Rampenmittel (14) bestimmt sind.

16. Reibungskupplung nach Anspruch 1, **dadurch gekennzeichnet, daß** die Schnecke (23) entlang ihrer Achse verschiebbar gelagert ist, wobei sie der Einwirkung eines als Nachstellmittel bezeichneten elastischen Mittels (46) ausgesetzt ist.
